Europäisches Patentamt

European Patent Office

Office européen des brevets

(11) Publication number: **0 009 376**
**B2**

# (12) NEW EUROPEAN PATENT SPECIFICATION

(45) Date of publication of the new patent specification: **17.10.90**

(21) Application number: **79301889.6**

(22) Date of filing: **14.09.79**

(51) Int. Cl.⁵: **B 32 B 27/32,** B 29 D 9/00, B 65 D 65/40

(54) Coextruded thermoplastic stretch-wrap.

(30) Priority: **15.09.78 US 942715**

(43) Date of publication of application:
**02.04.80 Bulletin 80/07**

(45) Publication of the grant of the patent:
**03.08.83 Bulletin 83/31**

(45) Mention of the opposition decision:
**17.10.90 Bulletin 90/42**

(84) Designated Contracting States:
**BE DE FR GB IT NL**

(56) References cited:
CA-A- 829 797    US-A-3 508 944
DE-A-1 504 622    US-A-3 783 089
DE-A-2 609 527    US-A-4 008 352
DE-A-2 803 598    US-A-4 022 646
GB-A- 914 411    US-A-4 050 221
GB-A-1 368 634    US-A-4 076 698
GB-A-1 495 380    US-A-4 205 021
JP-A-30 037 784

Beck et al "Kunststoff-Lexikon", 1967, Carl
Hanser Verlag, München, pp. 362 , 365

(73) Proprietor: **MOBIL OIL CORPORATION**
**150 East 42nd Street**
**New York New York 10017 (US)**

(72) Inventor: **Briggs, William Fred**
**2799 Ryder Road**
**Newark New York 14513 (US)**
Inventor: **Bullard, Edward Michael**
**1438 Winton Road South**
**Rochester New York 14618 (US)**

(74) Representative: **Colmer, Stephen Gary**
**Mobil Court 3 Clements Inn**
**London WC2A 2EB (GB)**

(56) References cited:
J.H. Briston "Plastics Films", 1974, published for
the Plastics Institute by Iliffe Books, London,
page 236

Brady and Clauser "Materials Handbook", 1977,
Mc Graw-Hill, New York, page 609

"Package Engineering" 3/1978 pages 29-33

"Package Engineering" 7/1978 page 28

"Modern Packaging" 5/1978, pages 55-58

EP 0 009 376 B2

Courier Press, Leamington Spa, England.

**EP  0 009 376  B2**

(56) References cited:

**Kirk-Othmer "Encyclopedia of Chemical
Technology", third edition, Volume 16, 1981
John Wiley & Sons, page 433**

# EP 0 009 376 B2

**Description**

The present invention relates to thermoplastic film structures, in particular laminate plastic film structures which have been formed utilizing coextrusion techniques. The laminate comprises a core of a linear low-density polyethylene having exterior skin layers of low density polyethylene, i.e., conventional polyethylene prepared utilizing the prior art free radical high pressure polymerization process.

The use of thermoplastic strength-wrap for the over-wrap packaging of goods, in particular the unitizing of pallet loads, is a currently commercially developing end use application for thermoplastic films, including polyethylene. There are a variety of overwrapping techniques which are employed utilizing such stretch wrap films, including locating the pallet load to be wrapped atop a rotating platform. As polyethylene film is laid on about the girth of the pallet load, the pallet load is rotated on its platform. The polyethylene strength wrap is applied from a continuous roll thereof. Breaking tension is applied to the continuous roll of film so that the film is being continuously stretched by the rotating pallet load. Usually the stretch-wrap film located adjacent to the rotating pallet load is vertically positioned and the rotating platform or turntable may be operated at speeds ranging from about 5 up to about 50 revolutions per minute. At the completion of the overwrap operation the turntable is stopped completely while the film is cut and attached to the previous layer of film employing tack sealing, tape, spray adhesives or a cling modified film whereby overlapping layers of the stretch wrap have a pronounced tendency to cling together at their interface. Depending upon the width of the stretch film roll, the load being overwrapped may be shrouded in the film while the vertically positioned film roll remains fixed in a vertical position, or the vertically positioned film roll (e.g. in the case of relatively narrow film widths and relatively wider pallet loads) may be arranged to move in a vertical direction as the load is being overwrapped whereby a spiral wrapping effect is achieved on the packaged goods.

Stretch films employed in the prior art have included film materials such as polyethylene, polyvinyl chloride and ethylene vinyl acetate.

With respect to the ethylene vinyl acetate type of stretch film products, the prior art has employed a percentage by weight of vinyl acetate in the copolymers of about 2% up to about 15% and preferably from about 4% up to about 12% by weight for stretch film applications.

Physical properties which are particularly significant for the successful use of thermoplastic films in stretch wrap applications include their puncture resistance, their elongation characteristics, their toughness, and their resistance to tearing while under tension. In particular, the latter physical characteristics of such film, i.e., their resistance to tearing and their resistance to puncture, are particularly significant. In general tensile toughness is measured as an area under a stress strain curve for a thermoplastic film, or it may be considered as the tensile energy absorbed, to elongate a film to break under tensile load. In turn, this toughness characteristic is a function of the capacity of such films to elongate. The process of stretching the film decreases that capacity. Accordingly, the stretch-wrap process will decrease the toughness of the film while it is in its stretched condition as an overwrap as compared to unstretched counterparts, including such materials as shrink-wrap. Generally this loss of toughness is proportional to the amount of stretch imparted ot the film as it is overwrapping a load of goods.

As hereinabove indicated, the resistance to tear characteristic of such films will be obviously an important physical characteristic for stretch-wrap application since if the edge of the stretch film roll is nicked, abraded or in any way weakened before stretching or during the stretching operation, premature tearing of the film will usually occur during wrapping or subsequent handling of the load of goods.

In practice, one commonly accepted technique for properly tensioning a film around a load such as a palletized load is to adjust the breaking force on the roll until a significant amount of neck-in (i.e. film width reduction) occurs. Alternatively film may be tensioned until an initiated tear results in unrestricted propagation of the tear across the film width.

It is an object of the present invention to provide a stretch film material which is a laminar structure comprising at least two and preferably three film layers. The prior art stretch film materials hereinabove referred to, such as polyvinyl chloride, ethylene vinyl acetate copolymer and low density polyethylene, have been found to offer reduced resistance to tear in both the film's machine direction and transverse direction as well as reduced toughness and elongation characteristics in contrast to the laminar film compositions of the present invention.

In accordance with the present invention a stretch-wrap material comprises a primary layer of a linear low-density polyethylene film with a coating on at least one side of branched, low-density polyethylene. Linear low density polyethylenes are copolymers of ethylene with minor amounts of another alpha olefin such as octene-1,4-methyl-pentene-1 or butene-1.

The laminar film may be made utilizing conventional coextrusion techniques.

The material construction of the laminate prepared in accordance with the following Example comprised a core layer of linear low-density polyethylene comprising ethylene which has been copolymerized with a minor amount of octene-1. The exterior skin layers were fabricated from low-density polyethylene resin produced by the high pressure process. The high pressure low-density polyethylene skin layer provides the requisite cling and gloss properties necessary for stretch film applications. The linear low-density polyethylene which contains the core layer imparts the desired tear and puncture resistance as well as the toughness.

3

Table 1 below shows the physical properties of the linear low-density polyethylene resins which were employed to fabricate the films identified as X-1, X-2 and X-3 in Table 3.

TABLE 1

| Film No. | X-1 | X-2 | X-3 |
|---|---|---|---|
| Density (g/cc) | 0.9202 | 0.9228 | 0.9186 |
| Melt Index | 2.3 | 2.1 | 2.4 |
| Molecular Weight | | | |
| Wt. Avg. | 99,100 | 96,300 | — |
| No. Avg. | 13,800 | 20,200 | — |

Also reported in Table 2 are the physical properties of a currently available LDPE laminar stretch film (identified as Film M) comprising two layers of high pressure (low-density) polyethylene. One layer had a density of 0.925 and a melt index of 1.4. The second layer had a density of 0.918 and a melt index of 7.0.

## Example

Linear low-density polyethylene was fed into the feed hopper of a conventional rotating screw extruder. The extruder screw employed has a 15 cm. diameter and a length to diameter ratio of about 24:1. The satellite extruder which was employed for the extrusion of the hereinabove low-density polyethylene material comprised a conventional extruder having an extruder screw with a 8 cm. diameter and a length to diameter ratio of about 24:1. Molten resin from the satellite extruder was fed into the cast film die affixed to the end of the core extruder, through an adapter designed to join the polymer stream from the satellite extruder to the molten polymer core stream so that it covers and encompasses the molten surfaces of the core layer. A more complete description of this process may be found in U.S. Patent No. 3,748,962. The conditions employed in the present example set forth in the Table 2 below. For comparison, the conditions used to prepare Film M are also given.

TABLE 2

| | Films X-1, X-2, X-3 | Film M |
|---|---|---|
| Melt Temperature: | | |
| Skin (°C) | 270 | 270 |
| Core (°C) | 300 | 295 |
| Line Speed (metres. min⁻¹) | 194 | 218 |
| Chill Roll | | |
| Temperature (°C) | 24 | 24 |
| Extruder Screw Speed (RPM) | | |
| Satellite | 65 | 65 |
| Main | 85 | 110 |
| Skin percentage % by wt. | 15 | 15 |
| Gauge of Laminate (microns) | 25 | 25 |
| % Octene-1 by Wt. | 12% | — |

Although the present Example describes a cast film process for the manufacture of the present stretch film products, other conventional thermoplastic film forming techniques may be employed, such as the commonly employed tubular extrusion process utilizing an entrapped air bubble to expand the extruded film tube.

Films X-1, X-2 and X-3 produced in accordance with the present Example each comprised a linear low-density polyethylene core consisting of about 85% by weight of the total laminar product, while the exterior high pressure low-density polyethylene skins contributed about 7½% by weight per side. The thickness of the composite laminar structure ranged from about 20 up to about 25 microns.

The physical properties of Films X-1, X-2, and X-3 are set forth in Table 3 below. Table 3 also shows, for comparative purposes, the physical properties of currently commercially available stretch-wrap materials, including polyvinyl chloride, ethylene vinylacetate, and a two layer low-density polyethylene (Film M).

TABLE 3

| Film | | X-1 | X-2 | X-3 | PVC | EVA | M |
|---|---|---|---|---|---|---|---|
| Caliper (microns ASTM D-882 | | 25 | 28 | 24 | 20 | 25 | 25 |
| Ultimate Tensile (kPa) | MD | 28960 | 37230 | 45110 | 33780 | 37230 | 24820 |
| | TD | 22750 | 25510 | 30740 | 27580 | 31030 | 15860 |
| Yield (kPa) | MD | 13100 | 8965 | 6605 | 11030 | 6210 | 8965 |
| | TD | 7580 | 8965 | 6640 | 6890 | 5520 | 8965 |
| Elongation (%) | MD | 500 | 650 | 597 | 300 | 450 | 500 |
| ASTM D-1922—Elmendorf Tear-g/micron | MD | 5.9 | 3.5 | 5.1 | 3.1 | 1.4 | 5.9 |
| | TD | 27 | 37 | 31 | 4.7 | 2.9 | 14 |
| ASTM D-882—Toughness J.cm$^{-3}$) | MD | 24440 | 33330 | 37100 | 17770 | 28880 | 23330 |
| Puncture—Instron Penetration | kg. | 4.5 | 5.0 | 4.3 | 5.4 | 6.8 | 3.6 |
| Energy Rupture | (J.) | 4.1 | 4.2 | 4.5 | 2.1 | 5.0 | 1.3 |
| Penetration Instron Probe | (cm.) | 12.7 | 12.7 | 15.7 | 7.6 | 12.7 | 7.6 |
| Cling Index | | — | 1.0 | 2.4 | 2.3 | 3.5 | 2.2 |
| ASTM D-2457 Gloss (% at 7°C) | | 87 | 85 | 89.9 | 87 | 74 | 89 |
| ASTM D-1003 Haze (%) | | 1.5 | 2.2 | 0.8 | 1 | 2 | 1 |
| Density (g/cc) | | .9151 | .9174 | — | 1.23 | .9313 | .9185 |

The types of high-pressure, low-density skin resins employed in the present invention may vary in their physical characteristics. Preferred skin resins however include those with densities of from about 0.917 up to about 0.921 g/cc and melt indices of from about 4 up to about 8. The preferred linear low density polyethylene copolymer core resins include those with densities of from about 0.916 up to about 0.925 g/cc with melt indices of from about 1.0 up to about 6.0. The thicknesses of the skin layers may vary widely, however preferred thicknesses include those from about 5% up to about 40% based upon the overall thickness of the laminate.

**Claims**

1. A laminar thermoplastic film adapted for use as a stretch-wrap film and comprising a layer of a linear, low-density copolymer of ethylene with a minor amount of another alpha-olefin, laminated to at least one layer of a branched-chain, low density ethylene polymer.

2. A film according to claim 1 in which the linear, low-density copolymer forms a core layer laminated on each side to a surface layer of the branched-chain, low-density polymer, each surface layer constituting 5 to 40% of the thickness of the laminate.

3. A film according to claim 1 or 2 in which the other alpha-olefin comprises octene-1,4-methyl-pentene-1 or butene-1.

**Patentansprüche**

1. Flächenförmige Thermoplastikfolie zur Verwendung als Spannpackungsfolie, die eine Schicht eines linearen Copolymers geringer Dichte aus Ethylen mit einer geringen Menge eines anderen alpha-Olefins umfaßt, das auf zumindest eine Schicht eines Ethylenpolymers mit geringer Dichte und verzweigter Kette laminiert ist.

2. Folie nach Anspruch 1, worin das lineare Copolymer geringer Dichte eine Kernschicht bildet, die auf jeder Seite auf eine Oberflächenschicht eines Polymers mit geringer Dichte und verzweigter Kette laminiert ist, wobei jede Oberflächenschicht 5 bis 40 Gew.-% der Dicke des Laminats bildet.

3. Folie nach Anspruch 1 oder 2, worin das andere alpha-Olefin Octen-1, 4-Methylpenten-1 oder Buten-1 ist.

**Revendications**

1. Une film thermoplastique stratifié susceptible d'être employé comme film d'emballage étirable et comprenant une couche d'un copolymère linéaire basse densité formé d'éthylène et d'une faible proportion d'une autre alpha-oléfine, formant un stratifié avec une couche à base d'au moins une couche de polymère d'éthylène basse densité, à chaîne ramifiée.

2. Un film thermoplastique selon la revendication 1, caractérisé en ce que le copolymère linéaire basse densité forme l'âme d'un stratifié, chacune des faces de cette âme étant revêtue d'une couche de polymère basse densité à chaîne ramifiée, qui forme chacune 5 à 40% de l'épaisseur du stratifié.

3. Un film selon la revendication 1 ou 2, caractérisé en ce que l'autre alpha-oléfine consiste en octène-1, 4-méthyl-pentène-1 ou butène-1.